## Europäisches Patentamt

## European Patent Office

## Office européen des brevets

(19)

(11) Veröffentlichungsnummer: **0 021 378**
**B1**

(12)

# EUROPÄISCHE PATENTSCHRIFT

(45) Veröffentlichungstag der Patentschrift:
04.05.83

(51) Int. Cl.³: **C 02 F 3/12**, C 02 F 3/02

(21) Anmeldenummer: **80103491.9**

(22) Anmeldetag: **21.06.80**

(54) Verfahren zum biologischen Reinigen von Abwasser.

(30) Priorität: **27.06.79 DE 2925895**

(43) Veröffentlichungstag der Anmeldung:
**07.01.81 Patentblatt 81/1**

(45) Bekanntmachung des Hinweises auf die Patenterteilung:
**04.05.83 Patentblatt 83/18**

(84) Benannte Vertragsstaaten:
**AT BE CH DE FR GB IT LI NL SE**

(56) Entgegenhaltungen:
**CA-A-1 036 720**
**DD-A-18 027**
**DE-A-2 721 206**
**DE-A-2 806 794**
**DE-A-2 942 112**
**DE-B-2 101 376**
**US-A-3 779 906**

(73) Patentinhaber: **HOECHST AKTIENGESELLSCHAFT,
Postfach 80 03 20, D-6230 Frankfurt/Main 80 (DE)**

(72) Erfinder: **Bauer, Alexander, Dr., Lerchenweg 3,
D-6233 Kelkheim (Taunus) (DE)**
Erfinder: **Leistner, Gerhard, Dr., Freseniusstrasse 47,
D-6384 Schmitten/Taunus (DE)**
Erfinder: **Müller, Gerhard, Feldbergstrasse 76,
D-6233 Kelkheim (Taunus) (DE)**
Erfinder: **Sell, Günther, Stettiner Strasse 84,
D-6234 Hattersheim am Main (DE)**

Verfahren zum biologischen Reinigen von Abwasser

Die Erfindung betrifft ein Verfahren zum biologischen Reinigen von Abwasser durch Begasen eines Schlamm-Wasser-Gemisches in einem 10 bis 30 m hohen Belebungsraum, dem kontinuierlich Abwasser, Belebtschlamm und Luft zugeführt und eine äquivalente Menge Schlamm-Wasser-Gemisch entnommen wird.

Abwässer, die organische Zwischenprodukte wie z. B. Phenole, Aromaten, chlorierte oder nitrierte Kohlenwasserstoffe als Verunreinigung enthalten, lassen sich biologisch nicht oder nur unbefriedigend reinigen.

Zum Verbessern der Reinigungsleistung ist es nach DE-B-2 101 376 bekannt, dem Behandlungsbehälter 5 bis 1500 Teile Aktivkohle oder 25 bis 2500 Teile adsorbierende Fullererde, die eine Oberfläche von wenigstens 100 m²/g haben, je Million Teile Abwasser zuzugeben.

Nach der DE-A-2 721 208 ist es bekannt, Abwasser in einem Behandlungsbehälter in einer Schlaufe zuführen. Die Reinigungsleistung ist nach wie vor unbefriedigend. Hier will die Erfindung Abhilfe schaffen. Die Aufgabe wird durch ein Verfahren zum biologischen Reinigen von Abwasser durch Begasen eines Schlamm-Wasser-Gemisches in einem 10 bis 30 m hohen Belebungsraum, dem kontinuierlich Abwasser, Belebtschlamm und Luft zugeführt und eine äquivalente Menge Schlamm-Wasser-Gemisch entnommen wird, gelöst, das dadurch gekennzeichnet ist, daß das Schlamm-Wasser-Gemisch und die Luft in mindestens einer Schlaufe geführt wird, und dem Schlamm-Wasser-Gemisch Stoffe in Korngrößen von 0,001 bis 10 mm und mit Oberflächen von 100 – 1500 m²/g in Mengen von 10 bis 1000 g/m² zulaufenden Abwassers zugemischt werden.

Abwässer, die organische Zwischenprodukte wie z. B. Phenole, Aromaten, chlorierte oder nitrierte Kohlenwasserstoffe als Verunreinigung enthalten, lassen sich biologisch nicht oder nur unbefriedigend reinigen. Es hat sich nun gezeigt, daß der biologische Abbau solcher Abwässer durch Zusatz von Stoffen mit großer Oberfläche wie Aktivkohle, Koks, Silikate und dergleichen verbessert werden kann, wenn man diese Stoffe in Mengen von 10 bis 100 g/m² Abwasser und in Korngrößen von 0,001 bis 10 mm dem Schlamm-Wasser-Gemisch zusetzt. In Verbindung mit der Führung des Schlamm-Wasser-Gemisches in wenigstens einer Schlaufe ist es möglich, diese Stoffe mit großer Oberfläche in der Schwebe zu halten, wodurch ihre Wirksamkeit für die Reinigung besonders zum Tragen kommt. Neben gutem biologischem Abbau sind als weitere Vorteile, die sich durch den Zusatz dieser Stoffe ergeben, bessere Ablaufqualität des gereinigten Abwassers, höhere Raumbelastung des Reaktors und weitgehende Unempfindlichkeit gegen Stoßbelastungen bezüglich Abwassermenge und Konzentration der Schadstoffe zu nennen.

Beispiel

In einem Reaktor von 20 m Höhe und 10 m Durchmesser, wie typenmäßig in der DE-A-2 805 793 beschrieben, sind 8 Leitrohre von einem Meter Durchmesser und 15 m Höhe angeordnet. Der Schlamm-Wasser-Gemisch-Spiegel ist 18 m hoch. Abwasser- und Belebtschlammzufuhr erfolgen in Bodennähe, ebenso die Luftzufuhr. Schlamm-Wasser-Gemisch wird in Höhe des Flüssigkeitsspiegels dem Reaktor entnommen.

Es werden 350 m³/h Abwasser mit einem $BSB_5$-Wert von 250 g/m³ und einem CSB-Wert von 600 g/m³, wobei ca. 50% der abzubauenden Schadstoffe aus chlorierten und nitrierten Kohlenwasserstoffen bestehen, und 1700 Nm³/h Luft in den Reaktor eingeleitet. Desgleichen werden am Fuß des Reaktors 700 m³/h Belebtschlamm eingeführt und ca. 30 g/m³ Abwasser Aktivkohle zugesetzt. Die Temperatur im Reaktor beträgt 20° C.

Der Versuch kann bei einer Schlammkonzentration von 15 kg/m³ Abwasser durchgeführt werden. Das dem Reaktor entnommene Wasser hat einen $BSB_5$-Wert von 10 g/m³ und einen CSB-Wert von 120 g/m³. Das entspricht einer Senkung des $BSB_5$-Wertes um 96% und des CSB-Wertes um 80%.

Im Vergleich hierzu wird der Versuch ohne Zusatz von Aktivkohle durchgeführt. Es wird eine Schlammkonzentration von nur etwa 4 kg/m³ Abwasser erreicht. Das ablaufende Wasser hat einen $BSB_5$-Wert von 60 g/m³ und einen CSB-Wert von 270 g/m³. Das entspricht einer Senkung des $BSB_5$-Wertes um 76% und des CSB-Wertes um 55%.

**Patentanspruch**

Verfahren zum biologischen Reinigen von Abwasser durch Begasen eines Schlamm-Wasser-Gemisches in einem 10 bis 30 m hohen Belebungsraum, dem kontinuierlich Abwasser, Belebtschlamm und Luft zugeführt und eine äquivalente Menge Schlamm-Wasser-Gemisch entnommen wird, dadurch gekennzeichnet, daß das Schlamm-Wasser-Gemisch und die Luft in mindestens einer Schlaufe geführt wird, und dem Schlamm-Wasser-Gemisch Stoffe in Korngrößen von 0,001 bis 10 mm und mit Oberflächen von 100 – 1500 m²/g in Mengen von 10 bis 1000 g/m³ zulaufenden Abwassers zugemischt werden.

**Claim**

Process for the biological purification of waste water by contacting a sludge/water mixture in an

activating vessel having a height of from 10 to 30 m, to which waste water, activated sludge and air are fed continuously and from which an equivalent quantity of sludge/water mixture is withdrawn, which comprises guiding the sludge/water mixture and the air in at least one loop-shaped flow and adding to the sludge/water mixture substances having a particle size of from 0.001 to 10 mm and a surface of from 100 to 1.500 m²/g in an amount of from 10 to 1.000 g/m³, relative to the waste water fed in.

## Revendication

Procédé d'épuration biologique d'eaux résiduaires, par introduction de gaz dans un mélange de boue et d'eau dans un espace de 10 à 30 mètres de hauteur contenant de la boue activée, dans lequel on introduit continuellement de l'eau résiduaire, de la boue activée et de l'air et d'où on retire une quantité équivalente d'un mélange boue/eau, procédé caractérisé en ce qu'on achemine le mélange boue/eau et l'air en au moins une boucle de cycle fermé et en ce que l'on incorpore au mélange boue/eau, en des quantités de 10 à 1000 g (par mètre cube d'eaux résiduaires introduites), des substances ayant des grosseurs de grains de 0,001 à 10 mm et ayant des surfaces spécifiques de contact de 100 à 1500 m²/g.